# EUROPEAN PATENT APPLICATION

(11) **EP 2 107 836 A2**
(43) Date of publication of application: **07.10.2009**
(21) Application number: 09250438.0
(22) Date of filing: 19.02.2009
(51) Int. Cl.: H04W 4/02

(54) **A portable terminal device and a radio communication system management method for the portable terminal device**

(30) Priority: 04.04.2008 JP 2008097699
(71) Applicant: Hitachi Ltd., Chiyoda-ku Tokyo (JP)
(72) Inventor: Fukushima, Shinichiro , Hitachi Ltd., Tokyo 100-8220 (JP); Nakajima, Yo , Hitachi Ltd., Tokyo 100-8220 (JP)
(74) Representative: Calderbank, Thomas Roger

(57) **Abstract**

The portable terminal (100), in starting the communication with a radio communication system having a different communication regulation in a different country or area, first recognizes the position thereof, acquires the radio communication regulation information varied from one country or area to another, and sets the corresponding regulation information for radio communication. The user can thus easily, unconsciously carry out the radio communication in keeping with the regulation of each country or area. Further, in the case where the regulation prohibits the use of the portable terminal (100), the fact can be displayed on the screen in an easy-to-understand way.

## Description

This invention relates to a technique for a portable terminal adapted to a communication system having different radio regulations for different regions including countries and areas.

JP-A-2004-357229 describes a conventional portable terminal and a conventional mobile radio communication system for carrying out the international conversation between various foreign countries as parties to the international roaming service agreement using the portable terminal capable of receiving the service of the audio memory function in different countries or areas, in which the usability or unusability of the audio memory function is determined in accordance with the legal situation of each member country.

According to JP-A-2004-357229, assume that a domestic radio communication network 1 and an overseas radio communication network 2 have signed the international roaming agreement 3 and that a mobile station 5 having the audio memory function has a conversation with a mobile station 7 in the overseas radio communication network 2. The mobile station 5 judges whether a country having a service area in the overseas radio communication network 2 legally restricts the conversation recording. In the case where the conversation recording is not legally restricted in the particular country, the mobile station 5 automatically validates the audio memory function as desired and records the conversation with the mobile station 7. In the case where the country legally restricts the conversation recording, on the other hand, the mobile station 5 automatically invalidates the audio memory function, and therefore, the conversation with the mobile station 7 is not recorded and the reason for the restriction of the conversation recording is indicated on the display of the mobile station 5. Specifically, the roaming number allocated to the user by the international roaming destination is stored as an identification number, and the recording function is limited based on the identification number. As a specific example, the portable terminal detects the telephone number thereof used in the international roaming destination, and the limitation or non-limitation of the recording function is determined by comparing the number system with the contents stored in the portable terminal.

Also, JP-A-2001-54159 describes a train radio system in which the transmission/reception frequency of a mobile station is switched to the frequency corresponding to a new train railway section at the time of change to the particular railway section. According to the disclosure of JP-A-2001-54159 instead of switching the frequency manually as in the past, the signal indicating the railway section transmitted by a ground unit 12 is received and a railway section switching point is recognized based on the signal, so that the setting is changed to the radio frequency of a new railway section while at the same time changing the setting of the railway section data used for data transmission as new information.

In spite of the occasional cases in which the function usability can be determined in accordance with the law of each country, the details of the regulation of some communication systems vary from one country to another for a portable terminal supporting different radio communication systems. In such a case, the detailed limitations of the frequency band and the output are required to be complied with.

In JP-A-2004-357229, the compliance with the regulation of the frequency band or the like in a particular region such as a country or area is not recognized as a problem. In JP-A-2001-54159, on the other hand, the railway sections are identified and a special configuration including the ground unit is required. Also, since there are not so many railway sections, the management of the characteristics such as the frequency band is not specially required to be taken into consideration. Although each mobile station may hold and use the entire information on the characteristics of each railway section, for example, it is not realistic to manage the entire information by a radio terminal or an IC tag reader used over a multiplicity of countries. Especially, in order to keep up with the change due to the amendment of the law or the relaxation of the restriction, it is very difficult for each terminal to manage the entire information.

The present invention may provide a portable terminal which supports a radio communication system having different regulations in different countries or areas and which is easily adapted to the regulation of a radio communication system in each country or area. This radio communication system includes the read/write operation from and into what is called an IC tag.

According to the invention, there is provided a portable terminal device according to claim 1. According to the invention, there is provided a portable terminal which specifies the regulation information based on the position of the portable terminal in accordance with the response from a management server to a request of the portable terminal thereby to make possible the communication with the corresponding radio communication system. This invention includes the aspects described below.

The portable terminal detects the position information on itself, transmits this position information and the request information requesting the regulation information to the management server, receives the regulation information specified by the management server using the position information, and records the regulation information in the storage unit of the portable terminal.

Also, the portable terminal may transmit the request information containing the regulation identification information for identifying the regulation information stored in the portable terminal. In this case, the management server compares the regulation information identified by the regulation identification information with the regulation information specified based on the position information, and in the case of coincidence, transmits to the portable terminal the information indicating that the regulation information stored in the portable terminal can be used. In the case of incoincidence, on the other hand, the regulation information specified by the position information is transmitted from the management server to the portable terminal.

In this case, the portable terminal stores a plurality of regulation information, and the regulation identification information for each regulation information is transmitted from the portable terminal to the management server. In the case where at least one of the information coincides with the regulation information specified based on the position information, the management server transmits the fact to the portable terminal.

In the case where the transmitted regulation information cannot be used by the portable terminal, the portable terminal outputs an error. The portable terminal stores a list of the regulation identification information for identifying the regulation information incapable (or capable) of being determined by itself, and this regulation identification information is compared the regulation identification information transmitted from the management server thereby to judge the usability or unusability of the regulation information transmitted from the management server.

Th position information according to this invention includes the latitude/longitude information specified by what is called the GPS, the region name (country name, area name, city name, etc.) specified by the portable terminal from the latitude/longitude information, and the region name (country name, area name, city name, etc.) received by the input from the user. In this case, each region name is rendered to coincide with that of the region limited by each regulation information. In the case of incoincidence, however, a table of correspondence between the region name and the region limited by each regulation information is held in at least one of the management server and the portable terminal, and based on this information, a particular region (limitation unit) coinciding with the region name input is specified.

Further, according to one aspect of this invention, the portable terminal detects the position thereof periodically, and judging whether the region constituting the limitation unit detected in the preceding session is changed, the request information is transmitted to the management server in the case where the region is changed.

Also, according to this invention, a change in the region constituting the limitation unit is detected by other than the reader/writer function (reader/writer unit), and upon this detection, the request information is transmitted to the management server. This process is realized by judging whether the region is changed or not with reference to a list of the regions constituting the limitation units held by the portable terminal. More specifically, the portable telephone function (or the electronic mail) detects that the country (area) is changed based on the access point connected, and notifies the change to the tag reader/writer function. As an alternative, the tag reader/writer function periodically makes an inquiry to the portable telephone function or the like, and the response to the inquiry may be used for judgment. As another alternative, a configuration may be employed in which such a change is detected by a control unit for controlling the portable terminal as a whole.

According to this invention, the communication conforming with the radio communication system of each region is easily made possible.

Other objects, features and advantages of the invention will become apparent from the following description of the embodiments of the invention taken in conjunction with the accompanying drawings.

### In the drawings,

Fig. 1 is a diagram showing the relation between the portable terminals, the base station, the GPS satellite and the UHF RFID R/W regulation information management server by country according to an embodiment of the invention.
Fig. 2 is a diagram showing an example of the internal configuration of the portable terminal according to an embodiment of the invention.
Fig. 3 is a diagram sowing an example of the items of the UHF RFID R/W regulation information by country according to an embodiment of the invention.
Fig. 4 is a diagram showing an example of the RFID R/W regulation setting information according to an embodiment of the invention.
Fig. 5 is an example of the processing flowchart before starting the RFID R/W operation according to an embodiment of the invention.
Fig. 6 is a diagram showing an example of the screen in the case where the RFID R/W cannot be used according to an embodiment of the invention.

According to a preferred embodiment of the invention, though described later in detail, the portable terminal starts the communication with a radio communication system having a different communication regulation in a different country or area by recognizing the position of the portable terminal, acquires the radio communication regulation information varied from one country or area to another and sets it in the radio communication. In this way, the user can easily, unconsciously carry out the radio communication conforming with the regulation.

An embodiment of the invention is explained with reference to the drawings. According to this embodiment, an explanation is given about the manner in which a portable terminal capable of receiving the speech and the data communication services in different countries and areas and carrying a R/W for radio communication with a RFID system keeps up easily with the regulation of a given country in the case where the radio communication regulation for the RFID R/W mounted on the portable terminal is varied from one country to another.

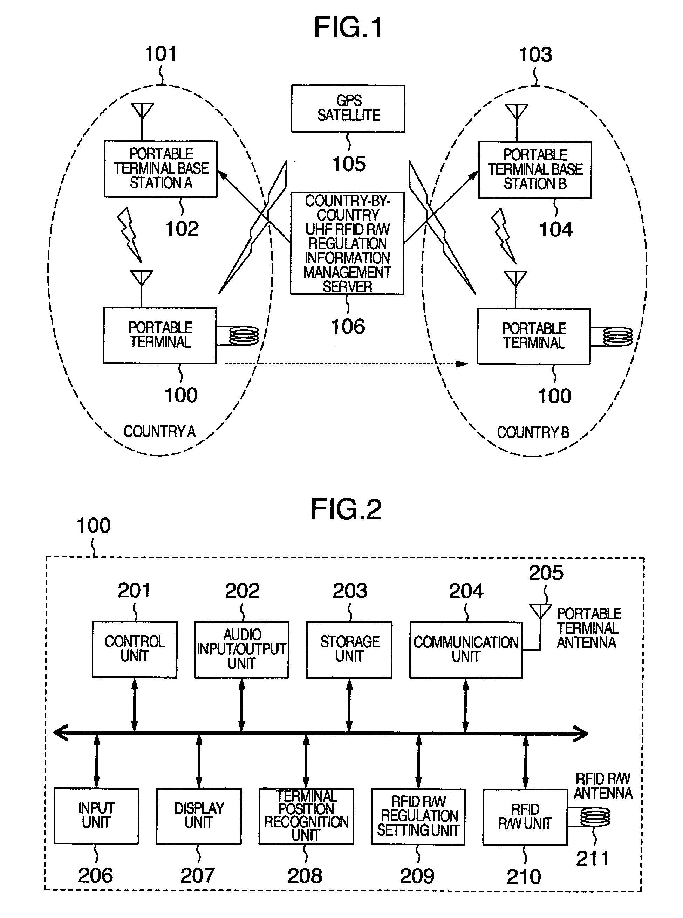

Fig. 1 is a diagram showing the relation between a base station A102, a base station B104, a GPS satellite 105 used by a terminal 100 to recognize the position thereof and a management server 106 holding the RFID R/W regulation information of the various countries in the case where the portable terminal 100 capable of receiving the services in different countries or areas and having mounted thereon the RFID R/W function for communication with the RFID system moves from the service area 101 of a country A to the service area 103 of a country B.

Fig. 2 is a diagram showing an example of the internal configuration of the portable terminal 100. The portable terminal 100 includes a control unit 201 holding the required programs and data for coordinating and controlling the portable telephone by various judgments and arithmetic operations, an input/output unit 202 for conducting the audio speech, a storage unit 203 for holding the various setting data, a communication unit 204 for conducting the audio communication and the data communication, a portable terminal antenna 205, an input unit 206 for inputting the 10-keys and starting the reading process of the RFID R/W function, a display unit 207 for indicating various information including the telephone number, a terminal position recognition unit 208 for recognizing the position of the terminal based on the information from the base station or the GPS satellite, a RFID R/W regulation setting unit 209 for setting the RFID R/W in accordance with the radio communication regulation of each country, a RFID R/W unit 210 for conducting the communication with RFID in accordance with the setting by the RFID R/W regulation information setting unit 209 and a RFID R/W antenna 211.

The RFID R/W regulation information setting unit 209 may either store the regulation information or store the regulation identification information (not shown) for identifying the regulation information stored in the storage unit 203 in correspondence with the regulation identification information. In the latter case, the regulation information corresponding to the regulation identification information stored in the setting unit 209 is read from the storage unit 203 and controlled.

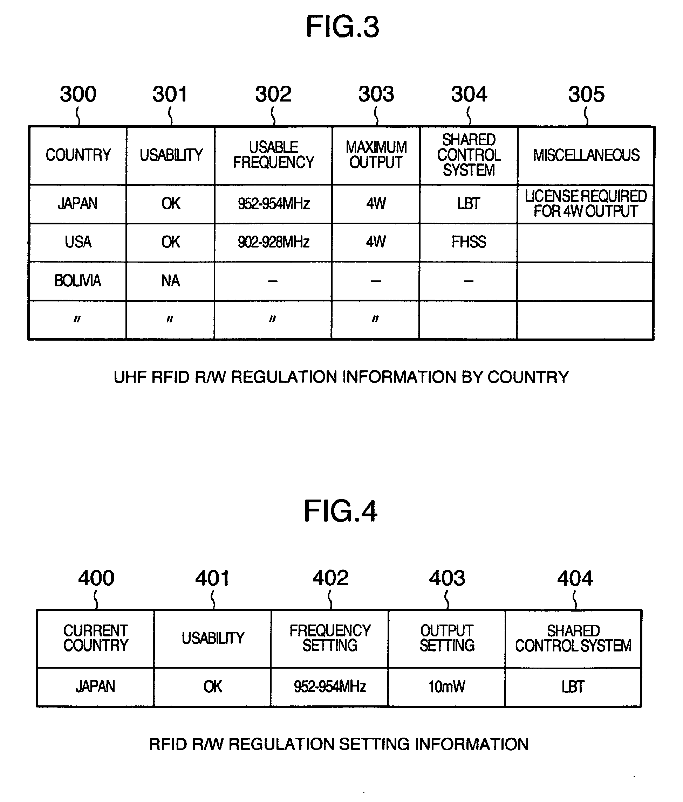

Fig. 3 is a diagram showing an example of the regulation information by country held in the country-by-country RFID R/W regulation information management server 106. Information items include a country 300 of which the regulation information is described, a usability 301 indicating whether the RFID R/W can be used in a particular country or not, a usable frequency 302, a maximum output 303, a shared control method 304 for avoiding the radio wave interference, and miscellaneous 305 indicating other information.

These data may be managed either centrally or individually by country. Also, these data may be either accessed and acquired by the portable terminal 100 or stored in the storage unit 203 of the portable terminal 100 in advance. Further, each regulation information is stored in correspondence with the regulation identification information (not shown) for identifying the particular regulation information. Furthermore, the storage unit of the management server 106 stores a correspondence table (not shown) indicating the county 300 and the position information thereof such as the latitude/longitude information transmitted from the portable terminal 100 in correspondence with each other.

Fig. 4 shows an example of the data set (stored) in the RFID R/W regulation information setting unit 209 of the portable terminal 100. These data are set to the extent coincident with the regulation information by country held in the RFID R/W regulation information management server 106. The radio communication of the portable terminal 100 is controlled by this information, and the portable terminal 100 conducts the communication in accordance with the contents of this information. As explained above, this information may be stored in the storage unit 203 while the corresponding regulation identification information may be stored in the RFID R/W regulation information setting unit 209. Also, though not shown in Fig. 4, the regulation identification information is also stored in correspondence. A plurality of this setting information may be stored. In this case, the flag is set on the setting information in current use.

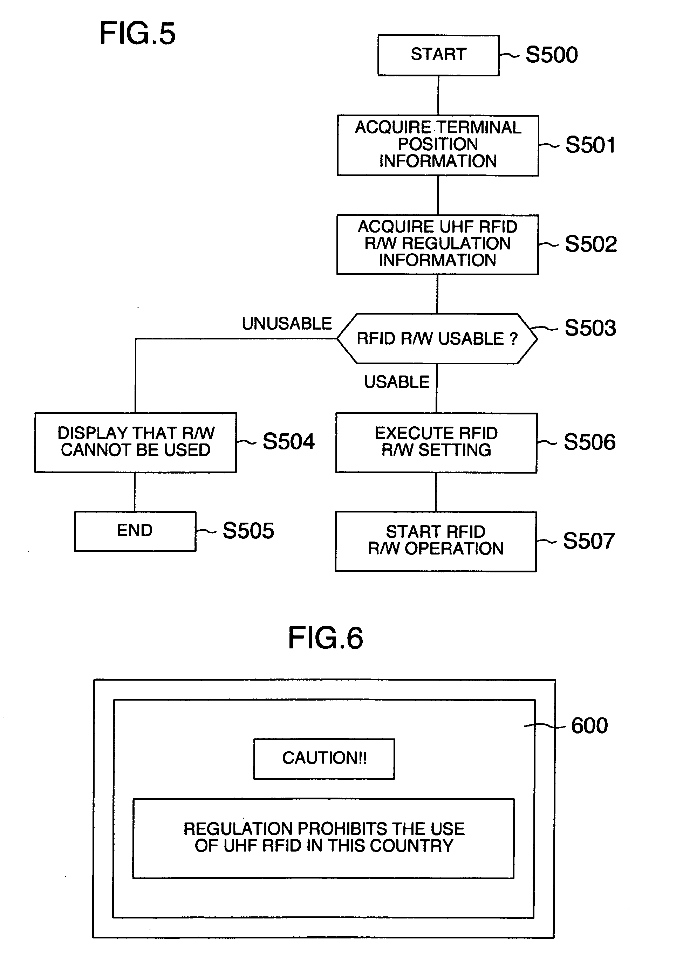

Fig. 5 shows an example of the flowchart indicating how the steps of the RFID reading process are executed using the RFID R/W of the portable terminal 100 in compliance with the regulation of each country.

The portable terminal 100, in starting the RFID reading process, accesses step S500 by depression of the read start switch, for example, allocated to the input unit 206, and the process proceeds to step S501. Incidentally, the same process may be started without depressing the read start switch as explained below. The process may be started upon detection of a communication error during the communication. Also, the portable terminal 100, by detecting the position thereof periodically, may start the process upon judgment that the region constituting the limitation unit detected in the preceding session is changed.

In step S501, the portable terminal 100 acquires the terminal position information and, by recognizing a particular country in which the portable terminal is now used, proceeds to step S502. A particular country in which the portable terminal is currently used may be recognized either by use of the international roaming information from the base station or by making an inquiry to the RFID R/W regulation information management server 106 based on the GPS information.

In step S502, the portable terminal 100 acquires the UHF RFID R/W regulation information and then proceeds to step S503. The regulation information is acquired by making inquiry to the RFID R/W regulation information management server 106 of the corresponding country based on the terminal position information recognized in step S502.

The process of steps S501 and S502 is explained in more detail. A first example is explained in the beginning. The portable terminal 100 acquires the latitude/longitude information indicating the present latitude/longitude by the GPS function. This latitude/longitude information is transmitted to the management server 106.

The management server 106 retrieves the name of a country corresponding to the transmitted latitude/longitude information from a correspondence table (indicating the correspondence between the latitude/longitude and countries) not shown. The management server 106 transmits the name of the country thus retrieved to the portable terminal 100. As a result, the portable terminal 100 acquires the terminal position information (name of the country) in step S501.

Then, the portable terminal 100 transmits the request information including the acquired country name (Japan, for example) to the management server 106. The management server 106 retrieves the regulation information corresponding to the country name included in the request information from the data base shown in Fig. 3, and transmits it to the portable terminal 100. This information is received by the portable terminal 100 and stored in the setting unit 209 or the storage unit 203. As a result, the regulation information corresponding to the present invention is acquired.

In this example, the process is executed similarly also in the case where the international roaming information is used in place of the GPS information. In such a case, the information specifying an access point or a country (country name) can be used as the international roaming information. The information specifying the access point is used in place of the latitude/longitude information, and the correspondence table is also replaced by access points. In the case where the country name is specified, on the other hand, step S501 is skipped and the process is executed from step S502.

Next, a second example is explained. Specifically, the portable terminal 100 specifies no position information, i.e. no country name in step S501 and acquires the regulation information. In other words, the portable terminal 100 transmits the request information including the latitude/longitude information and the information indicating the access point in step S501. Based on this information, the management server 106 specifies the position information (country name), and transmits the regulation information including the specified country name to the portable terminal 100.

Also, the request information may be transmitted together with the regulation identification information for identifying the regulation information stored in the setting unit 209 (or the storage unit 203) of the portable terminal 100. In this case, the management server 106 compares the regulation identification information contained in the request information with the regulation identification information including the country name specified above. In the case of coincidence, the information that the required regulation information is already stored is transmitted to the portable terminal 100. In the case of incoincidence, on the other hand, the corresponding regulation information is transmitted to the portable terminal.

Also, in place of the latitude/longitude information, the operator may directly set by inputting the country name in the portable terminal 100.

Next, a third example is explained. In this example, the table shown in Fig. 3 is held also in the portable terminal 100. In many cases, however, all the regulation information cannot be held due to the capacity limitation. First, as in the first example, the portable terminal 100 receives the notification of the position information (i.e. the country name) from the management server 106. From the regulation information stored in the storage unit 203 in the portable terminal 100, the corresponding regulation information is retrieved with the country name as a key. The corresponding regulation information, if stored in the storage unit 203, is used. For example, this information is copied or transferred from the storage unit 203 to the setting unit 209. As an alternative, the regulation identification information for identifying the regulation information may be stored in the setting unit 209 or a valid flag may set for the corresponding regulation information in the storage unit 203.

In the case where the corresponding regulation information cannot be retrieved, on the other hand, the portable terminal 100 transmits the request information including the country name to the management server 106, and then executes the process similar to those of the first and second examples.

Next, in step S503, the portable terminal 100 judges, from the regulation information acquired in step S502, whether the RFID R/W is usable at the position where the portable terminal is located, and in the case where it is so usable, the process proceeds to step S506. In the case where the portable terminal cannot be used there, on the other hand, the process proceeds to step S504.

Specifically, the column "usability 301" in the specified regulation information is accessed and the content thereof is complied with. In the case of Fig. 3, for example, the portable terminal is judged unusable in Bolivia. In the table of Fig. 3 held by the management server 106, the usability column 301 may be done without. In such a case, the portable terminal 100 makes usability or unusability judgment based on a correspondence table held therein. Specifically, the correspondence table stored the regulation identification information in correspondence with the information indicating whether the regulation information associated with the particular regulation identification information can be used or not by the portable terminal, and this correspondence table is searched by the regulation identification information for the specified regulation information thereby to determine usability or unusability. Incidentally, this correspondence table may be replaced by a list of the usable regulation identification information and the unusable regulation identification information.

The portable terminal 100, if unusable, indicates in step S504 on the display unit 207 that the R/W is unusable, and proceeding to step S505, ends the process.

The portable terminal 100, if usable, on the other hand, sets the R/W based on the regulation information and proceeds to step S507. In step S507, the RFID R/W operation is started by the set regulation.

Fig. 6 shows an example of the screen with the unusability of RFID R/W indicated on the display unit in step S504. Incidentally, according to this embodiment, the portable terminal 100 displays, in steps S507 and S507, the content of the "miscellaneous" column 305 of the specified regulation information (in the example shown in Fig. 3, "license is required for 4W output" in "Japan").

Incidentally, in the case where the regulation information can be shared by a plurality of countries, the plurality of the country names are recorded in the country column 300 of the regulation information shown in Figs. 3 and 4.

As described above, according to this embodiment, even a portable terminal having a radio communication unit in keeping with a radio communication system having different communication regulations in different countries or areas can recognize the position of the portable terminal, acquire the radio communication regulation information varied from one country or area to another and set it for radio communication. Therefore, in accordance with each country or area, the user can easily, unconsciously carry out the radio communication meeting the regulation. Further, in the case where the portable terminal cannot be used due to the regulation, the fact can be displayed on the screen in an easy-to-understand way.

It should be further understood by those skilled in the art that although the foregoing description has been made on embodiments of the invention, the invention is not limited thereto and various changes and modifications may be made without departing from the scope of the appended claims as interpreted by the description and drawings.

## Claims

1. A portable terminal device (100) including a radio communication unit adapted for radio communication systems having different communication regulations in different regions, comprising:
a means (208) for detecting the information related to the position at which the portable terminal device (100) is located;
a means (209) for specifying the regulation information to realize a corresponding radio communication system based on the position-related information detected; and
a means (204) for executing the radio communication with the radio communication system corresponding to the regulation information specified.

2. The portable terminal device (100) according to Claim 1, further comprising a means (205) connecting to a management server (106) storing the regulation information for each region,
wherein the connecting means (205) transmits the request information including the detected position-related information to the management server (106) requesting the corresponding regulation information, and
wherein the management server (106), upon reception of the regulation information retrieved based on the position-related information, specifies the corresponding regulation information.

3. The portable terminal device (100) according to Claim 2, further comprising a means (203) for storing the regulation information,
wherein the connecting means (205) transmits the request information including the regulation identification information for identifying the regulation information stored in the storage means (203) to the management server (106), and
wherein the connecting means (205), upon judgment that the regulation information retrieved by the management server (106) fails to coincide with the regulation information identified by the regulation identification information, receives the retrieved regulation information from the management server (106).

4. The portable terminal device (100) according to Claim 3,
wherein the connecting means, upon judgment by the management server (106) that the regulation information retrieved by the management server (106) coincides with the regulation information identified by the regulation identification information, receives the information indicating the coincidence from the management server (106), and
wherein the radio communication execution means (204) carries out the radio communication in accordance with the radio communication system corresponding to the regulation information stored in the storage means (203).

5. The portable terminal device (100) according to any of Claims 1 to 4,
wherein the radio communication execution means (204) carries out the radio communication by reading and writing the information from and into an IC tag.

6. A radio communication system management method for a portable terminal device (100) including a radio communication unit (204) corresponding to a radio communication system having different communication regulations in different regions,
wherein the portable terminal device (100) comprises:
means for detecting the information related to the position at which the local portable terminal device (100) is located;
means for specifying the regulation information to realize a corresponding radio communication system based on the position-related information detected; and
means for executing the radio communication with the radio communication system corresponding to the regulation information specified.

7. The radio communication system management method for a portable terminal device (100) according to Claim 6,
wherein the portable terminal device (100) is connected with a management server (106) storing the regulation information for each region,
wherein the portable terminal device (100) transmits the request information to the management server (106) to request the regulation information containing the detected position-related information,
wherein the management server (106) retrieves the regulation information based on the position-related information and transmits the retrieved regulation information to the portable terminal device (100), and
wherein the portable terminal device (100) receives the transmitted regulation information thereby to specify the regulation information.

8. The radio communication system management method for a portable terminal device (100) according to Claim 7,
wherein the portable terminal device (100) has a storage unit (203) for storing the regulation information,
wherein the portable terminal device (100) transmits the request information containing the regulation identification information for identifying the regulation information stored in the storage unit (203) to the management server (106),
wherein the management server (106) judges whether the regulation information retrieved by the management server (106) coincides with the regulation information identified by the regulation identification information, and
wherein upon judgment that the regulation information retrieved by the management server fails to coincide with the regulation information identified by the regulation identification information, the management server (106) transmits the retrieved regulation information to the portable terminal device (100).

9. The radio communication system management method for a portable terminal device (100) according to Claim 8,
wherein the management server, upon judgment that the regulation information retrieved by the management server coincides with the regulation information identified by the regulation identification information, transmits the information indicating the coincidence to the portable terminal device (100),
wherein the portable terminal device (100), upon reception of the information indicating the coincidence, executes the radio communication with the radio communication system corresponding to the regulation information stored in the storage unit (203) .

10. The radio communication system management method for a portable terminal device (100) according to any one of Claims 6 to 9,
wherein the radio communication execution means (204) of the portable terminal device (100) reads and writes the information from and into an IC tag by radio communication.
